# DEMANDE DE BREVET EUROPEEN

(11) **EP 4 836 285 A1**
(43) Date de publication de la demande: **04.11.2026**
(21) Numéro de dépôt: 26174118.5
(22) Date de dépôt: 23.04.2026
(51) Int. Cl.: H02P 8/32, H02P 8/12

(54) **PROCEDE AMELIORE DE CONTROLE D'UN MOTEUR PAS A PAS**

(30) Priorité: 30.04.2025 FR 2504608
(71) Demandeur: Delta Dore, 35270 Bonnemain (FR)
(72) Inventeur: LAMBERT, David, 35270 BONNEMAIN (FR); CHABANNES, André, 35270 BONNEMAIN (FR)
(74) Mandataire: Cabinet Le Guen Maillet

(57) **Abrégé**

L'invention concerne un procédé de contrôle d'un moteur (M) de type pas à pas comprenant au moins un enroulement (A) bipolaire, exécuté par une circuiterie électronique de contrôle (10) dudit moteur (M), ledit procédé comprenant une exécution d'une séquence itérative de contrôle d'une tension électrique d'alimentation (V_{A}) appliquée aux pôles dudit enroulement (A) respectivement connectés à des lignes d'alimentation (A1, A2) de ladite circuiterie électronique de contrôle (10), ladite séquence de contrôle comprenant une pluralité d'étapes successives associées chacune à un état de ladite tension (V_{A}), le procédé étant caractérisé en ce qu'au moins l'une desdites étapes de ladite séquence, dite étape de mesure, implique une déconnexion dudit enroulement (A) desdites lignes d'alimentation (A1, A2) précédée d'un court-circuit entre lesdites lignes d'alimentation (A1, A2) d'une durée prédéterminée inférieure à la durée de ladite étape de mesure.

## Description

### DOMAINE TECHNIQUE

La présente invention concerne un procédé de contrôle d'un moteur pas à pas. L'invention concerne en particulier une déconnexion améliorée d'un enroulement de moteur pas à pas, de lignes d'alimentation électrique, afin d'opérer une mesure de tension ou de courant dans l'enroulement.

### ÉTAT DE LA TECHNIQUE ANTÉRIEURE

Les circuits de contrôle de moteurs pas à pas présentent des formes diverses et de nombreux circuits intégrés dédiés sont disponibles. De tels circuits de contrôles dédiés utilisent souvent une architecture d'alimentation électrique de type « pont en H » pour alimenter des enroulements d'un moteur pas à pas, ce qui permet d'inverser le courant dans chacun des enroulements d'un moteur pas à pas et d'ajuster en outre la valeur moyenne de la tension présentée aux bornes d'un tel enroulement. Un tel circuit de contrôle dédié est le plus souvent piloté à partir de signaux appliqués à certaines de ses broches d'entrée, utiles à son contrôle. Il est alors possible de piloter dynamiquement et en temps réel, à partir d'un dispositif opérant un contrôle du circuit dédié, si une ligne d'alimentation électrique en sortie du circuit de contrôle dédié, utilisée pour opérer une alimentation d'un enroulement de moteur, présente un niveau de tension haut, bas, ou encore est déconnectée (haute-impédance), etc. Le niveau d'intégration de ce type de circuit de contrôle de moteur pas à pas est tel que, selon l'architecture ou l'agencement interne du circuit, des phénomènes parasites peuvent survenir, tels que des transitoires apparaissant sur des lignes d'alimentation électrique du circuit, lesquels transitoires sont alors préjudiciables à l'intégrité des circuits. Cela peut notamment être le cas lorsqu'un enroulement est déconnecté d'une ligne d'alimentation électrique d'un circuit de contrôle d'un moteur pas à pas alors que le circuit comprend des diodes internes de protection, et que l'enroulement déconnecté emmagasine de l'énergie électrique. La situation peut être améliorée.

### EXPOSÉ DE L'INVENTION

Un objet de la présente invention est de proposer un procédé de contrôle amélioré d'un moteur pas à pas permettant de résoudre des problèmes de l'art antérieur, de façon simple et peu coûteuse, sans requérir de composants additionnels.

A cet effet, il est proposé un procédé de contrôle d'un moteur pas à pas, le moteur comprenant au moins un enroulement bipolaire, le procédé étant exécuté par une circuiterie électronique de contrôle du moteur et le procédé comprenant une exécution d'une séquence itérative de contrôle d'une tension électrique d'alimentation appliquée aux pôles de l'enroulement respectivement connectés à des lignes d'alimentation de la circuiterie électronique de contrôle, la séquence de contrôle comprenant une pluralité d'étapes successives associées chacune à un état de la tension, le procédé étant tel qu'au moins l'une des étapes de la séquence, dite étape de mesure, implique une déconnexion de l'enroulement des lignes d'alimentation immédiatement précédée d'un court-circuit entre les lignes d'alimentation d'une durée prédéterminée inférieure à la durée de l'étape de mesure.

Ainsi, il est avantageusement possible de dissiper l'énergie accumulée dans l'enroulement par dissipation thermique avant de déconnecter l'enroulement de ses lignes d'alimentation en sortie du système de contrôle, et ce, sans requérir un ajout de composants tels que des diodes d'écrêtage ou des capacités, par exemple.

Selon un mode de réalisation, l'étape de mesure opérée selon le procédé vise à mesurer un courant dans l'enroulement ou une tension aux bornes de l'enroulement, via une circuiterie électronique indépendante des lignes d'alimentation.

Un autre objet de l'invention est un système de contrôle d'un moteur pas à pas, le moteur comprenant au moins un enroulement bipolaire, le système comprenant une circuiterie électronique de contrôle du moteur configurée pour :
- opérer une séquence itérative de contrôle d'une tension électrique d'alimentation appliquée aux pôles de l'enroulement respectivement connectés à des lignes d'alimentation de la circuiterie électronique de contrôle, et pour que
- la séquence de contrôle comprenne une pluralité d'étapes successives associées chacune à une valeur de ladite tension,
la circuiterie électronique du système étant configurée pour que l'une desdites étapes de la séquence, dite étape de mesure, implique une déconnexion de l'enroulement des lignes d'alimentation immédiatement précédée d'un court-circuit entre les lignes d'alimentation, d'une durée prédéterminée inférieure à la durée de l'étape de mesure.

Selon un mode de réalisation, le système de contrôle comprend une circuiterie électronique configurée pour mesurer un courant dans l'enroulement, ou une tension aux bornes de l'enroulement, via une circuiterie électronique indépendante des lignes d'alimentation.

Selon un mode de réalisation, le système comprend un circuit intégré dédié au contrôle d'un moteur pas à pas.

Un autre objet de l'invention est une vanne thermostatique comprenant un système de contrôle tel que précédemment décrit.

L'invention a encore pour objet un produit programme d'ordinateur comprenant des instructions de code de programmes pour exécuter les étapes d'un procédé de contrôle d'un moteur pas à pas tel que précédemment décrit lorsque ces instructions sont exécutées par un processeur d'un système de contrôle d'un moteur pas à pas, ainsi qu'un support de stockage comprenant un tel produit programme d'ordinateur.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints :
[Fig. 1] illustre schématiquement un système de contrôle d'un moteur pas à pas, selon un mode de réalisation ;
[Fig. 2] est une représentation schématique d'une vanne thermostatique comprenant un système de contrôle d'un moteur pas à pas tel que déjà représenté sur la Fig.1 ;
[Fig. 3] illustre est un ordinogramme illustrant schématiquement un procédé de contrôle d'un moteur pas à pas, selon un mode de réalisation ;
[Fig. 4] illustre schématiquement un dispositif de contrôle du système de contrôle apte à exécuter le procédé déjà illustré sur la Fig. 3, selon un mode de réalisation ; et,
[Fig. 5] illustre une séquence de contrôle d'une tension aux bornes d'un enroulement d'un moteur pas à pas, selon un mode de réalisation.

### EXPOSÉ DÉTAILLÉ DE MODES DE RÉALISATION

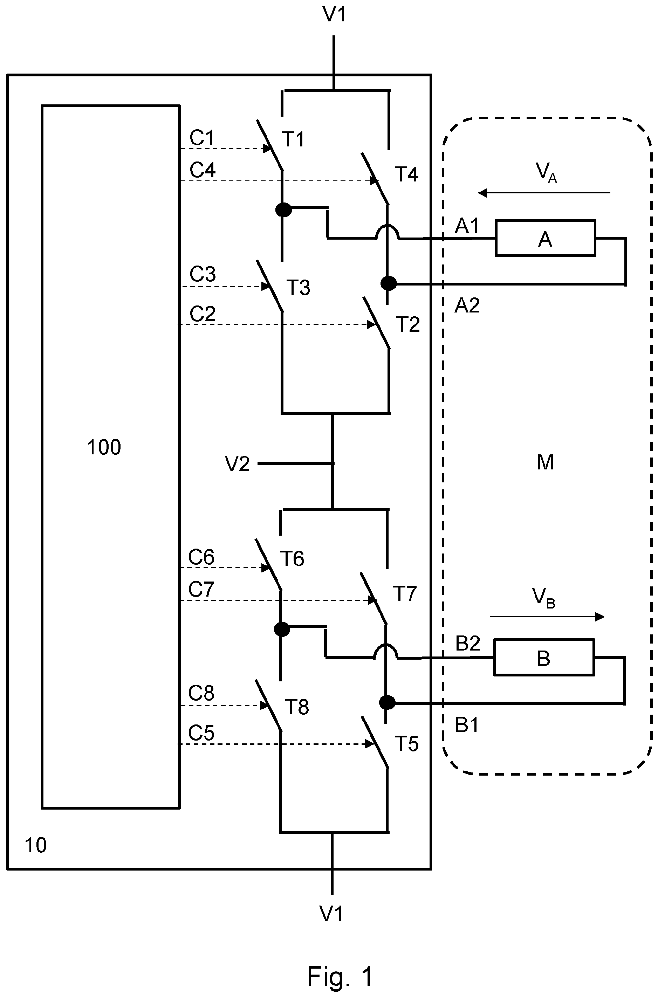

La **Fig. 1** est une représentation schématique d'un système 10 de contrôle d'un moteur électrique M. Le moteur M est un moteur électrique de type pas à pas et comprend deux enroulements A et B. De façon connue, des combinaisons de tensions appliquées aux enroulements A et B du moteur M permettent d'opérer une rotation du rotor du moteur M dans un sens ou dans l'autre, et de façon quantifiée. Selon l'exemple représenté, chacun des enroulements A et B du moteur M est bipolaire (ou encore dipolaire) et est connecté entre deux lignes d'alimentation électrique du système 10 qui sont dédiées à son alimentation électrique. Ainsi, des lignes d'alimentation électrique A1 et A2 du système 10 sont connectées aux bornes de l'enroulement A du moteur M, de façon à y appliquer une tension variable V_{A}. De façon similaire, des lignes d'alimentation électrique B1 et B2 du système 10 sont connectées aux bornes de l'enroulement B du moteur M, de façon à y appliquer une tension variable V_{B}. De façon connue, des combinaisons variables des tensions V_{A} et V_{B} établies selon des séquences de contrôle prédéfinies sont de nature à entrainer en rotation le rotor du moteur M, dans un sens ou dans l'autre, ou encore un arrêt du rotor. Pour ce faire, les tensions variables V_{A} et V_{B} sont établies en contrôlant deux circuits électroniques de type « pont en H » internes au système 10 de contrôle, permettant notamment d'opérer des commutations et des inversions de courants dans les enroulements A et B du moteur M, selon les séquences prédéfinies. De telles séquences, dites « séquences d'excitation des phases » du moteur M, ne sont pas décrites ici dans la mesure où elles sont connues et ne participent pas ici à la compréhension de l'invention. Un premier circuit de type pont en H comprend quatre éléments de commutation de type dipôle T1, T2, T3 et T4 agencés de sorte qu'un pôle de T1 et un pôle de T4 sont connectés ensemble et reliés à une ligne d'alimentation V1 ; qu'un pôle de T2 et un pôle de T3 sont connectés ensemble et reliés à une ligne d'alimentation V2 ; que les autres pôles de T1 et T3 sont reliés ensemble pour constituer la ligne d'alimentation électrique A1 et que les autres pôles de T2 et T4 sont reliés ensemble pour constituer la ligne d'alimentation électrique A2. De façon similaire, un deuxième circuit de type pont en H comprend quatre éléments de commutation de type dipôle T5, T6, T7 et T8 agencés de sorte qu'un pôle de T5 et un pôle de T8 sont connectés ensemble et reliés à la ligne d'alimentation V1 ; qu'un pôle de T6 et un pôle de T7 sont connectés ensemble et reliés à la ligne d'alimentation V2 ; que les autres pôles de T5 et T7 sont reliés ensemble pour constituer la ligne d'alimentation électrique B1 et que les autres pôles de T6 et T8 sont reliés ensemble pour constituer la ligne d'alimentation électrique B2. Selon un mode de réalisation, le potentiel électrique de la ligne d'alimentation V1 du système 10 est supérieur au potentiel électrique de la ligne d'alimentation V2 du système 10, ou vice versa. Selon un exemple de réalisation, le potentiel électrique de la ligne d'alimentation V1 est fixe et présente une valeur prédéfinie adaptée aux caractéristiques du moteur électrique M. Par exemple, le potentiel électrique V1 peut être égal à 3 volts, 5 volts, 12, volts, etc. et le potentiel V2 peut être égal à 0 volt, ou vice versa. Il convient que les potentiels V1 et V2 soient suffisamment différents pour pouvoir générer, via la structure pont en H faite de T1, T2, T3 et T4, une tension variable V_{A} adaptée à un contrôle nominal de l'enroulement A du moteur M. De façon similaire, la différence des potentiels V1 et V2 permet de générer, via la structure pont en H faite de T5, T6, T7 et T8, une tension variable V_{B} adaptée à un contrôle nominal de l'enroulement B du moteur M. Selon un mode de réalisation, les éléments de commutation T1, T2, T3, T4, T5, T6, T7 et T8 sont des transistors de type MOSFET contrôlés chacun par une sortie d'un dispositif de contrôle 100. Ainsi, une sortie C1 du dispositif de contrôle 100 contrôle la commutation de l'élément de commutation T1 ; une sortie C2 du dispositif de contrôle 100 contrôle la commutation de l'élément de commutation T2 ; une sortie C3 du dispositif de contrôle 100 contrôle la commutation de l'élément de commutation T3 et une sortie C4 du dispositif de contrôle 100 contrôle la commutation de l'élément de commutation T4, tous utilisés pour le contrôle de la tension d'alimentation aux bornes de l'enroulement A du moteur M. De façon similaire, une sortie C5 du dispositif de contrôle 100 contrôle la commutation de l'élément de commutation T5 ; une sortie C6 du dispositif de contrôle 100 contrôle la commutation de l'élément de commutation T6 ; une sortie C7 du dispositif de contrôle 100 contrôle la commutation de l'élément de commutation T7 et une sortie C8 du dispositif de contrôle 100 contrôle la commutation de l'élément de commutation T8, tous utilisés pour le contrôle de la tension d'alimentation aux bornes de l'enroulement B du moteur M. Selon un exemple de configuration, lorsque le potentiel A1 est supérieur au potentiel A2, que les transistors T1 et T2 sont commutés (comme des interrupteurs fermés) et que les transistors T3 et T4 sont non commutés (comme des interrupteurs ouverts), un courant positif circule depuis l'équipotentielle A1 vers l'équipotentielle A2. En outre, toujours lorsque le potentiel A1 est supérieur au potentiel A2, que les transistors T1 et T2 sont non commutés (comme des interrupteurs ouverts) et que les transistors T3 et T4 sont commutés (comme des interrupteurs fermés), un courant négatif circule depuis l'équipotentielle (ligne d'alimentation) A1 vers l'équipotentielle (ligne d'alimentation) A2. Selon un mode de réalisation, une diode intrinsèque du MOSFET existe par construction des différentes zones constituant un interrupteur entre les bornes de chacun des éléments de commutation T1 à T8 (ces diodes ne sont pas représentées sur la figure). Selon un mode réalisation, le dispositif de contrôle 100 peut opérer de façon autonome dans un dispositif, un produit ou un équipement quelconque. Selon une variante, le dispositif de contrôle 100 peut être contrôlé à distance via une interface filaire ou sans fil, par exemple dans le cadre d'une application domotique. Selon un mode de réalisation particulier et non limitatif, le système 10 est intégré dans un équipement domestique, tel qu'une vanne thermostatique motorisée autonome ou pilotable à distance.

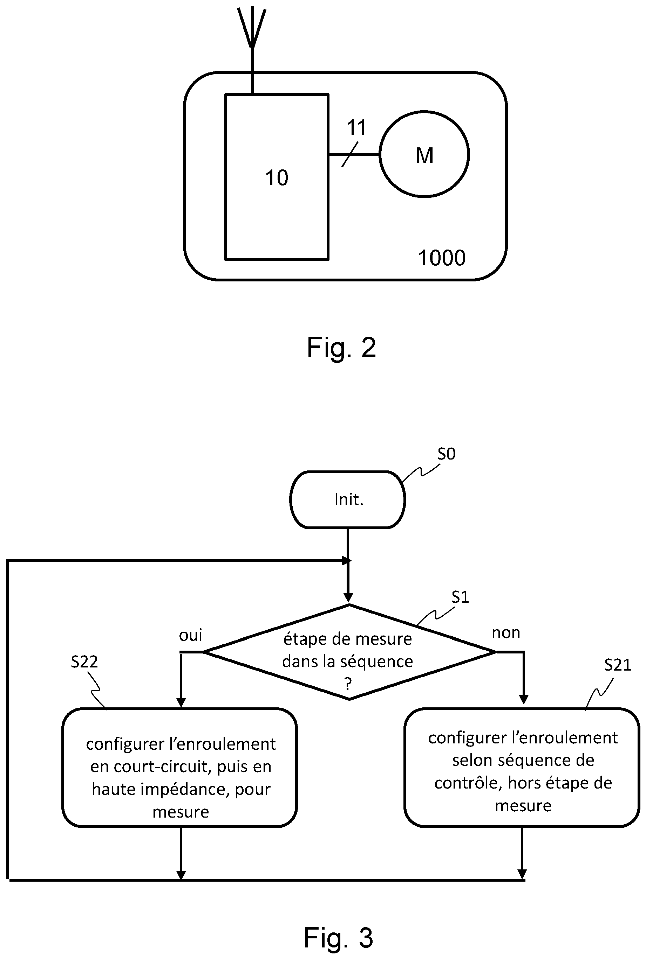

La **Fig. 2** illustre schématiquement une vanne thermostatique motorisée 1000 comprenant le système 10 de contrôle d'un moteur pas à pas et le moteur M de type pas à pas, tous deux reliés par un bus de connexion 11 qui comprend les lignes d'alimentation A1, A2, B1 et B2 utiles au contrôle en rotation et à l'arrêt du moteur M. Selon un mode de réalisation, le système 10 comprend une interface de communication sans-fil (illustrée par un système antennaire) permettant un contrôle à distance du dispositif de contrôle 100 du système de contrôle 10, par exemple dans le cadre d'une application domotique de gestion de chauffage. L'installation d'une telle vanne thermostatique sur un radiateur ou sur la partie mécanique d'une vanne peut requérir une phase de calibration permettant de déterminer la course du moteur M agencé pour opérer un contrôle de la vanne thermostatique 1000. Par exemple, il peut s'agir de déterminer des butées de fin de course de la partie mécanique d'une vanne ou encore des butées entre une partie mécanique d'une vanne et un actionneur ou actuateur solidaire du rotor du moteur M ou mécaniquement couplé au rotor du moteur M. Pour ce faire, une mémorisation des positions de telles butées mécaniques peut être requise ce qui implique d'opérer une mesure de courant induit dans un enroulement du moteur M lorsque l'autre enroulement est contrôlé pour entrainer en rotation le rotor du moteur M pendant la phase de calibration. Une telle opération requiert de positionner en haute-impédance (c'est-à-dire déconnecter) l'enroulement dans lequel la mesure de courant induit doit être réalisée. Il s'agit d'une déconnexion de l'enroulement utilisé pour la mesure de la circuiterie d'alimentation électrique du système 10. Selon un exemple de réalisation, l'enroulement A est utilisé pour opérer une mesure de courant induit généré par la présence de forces contre électromotrices lorsqu'un couple mécanique résistant apparait sur le rotor en rotation du moteur M, lors de la phase de calibration.

Un procédé de contrôle amélioré du moteur M permettant une déconnexion astucieuse et sécurisée de l'enroulement A, sans apparition de transitoires préjudiciables à l'intégrité des circuits en présence, est illustré sur la **Fig. 3****.**

Une étape **S0** est une étape d'initialisation au terme de laquelle tous les circuits dispositifs et systèmes impliqués dans l'exécution du procédé décrit sont normalement initialisés, configurés et nominalement opérationnels. Le système de contrôle 10, est alors programmé pour opérer conditionnellement et selon des consignes une rotation dans un sens, une rotation dans l'autre sens, ou encore une phase de calibration telle que susmentionnée. Pour ce faire, le dispositif de contrôle 100 interne au système de contrôle 10 contrôle en séquence les différents éléments de commutation selon des séquences itératives prédéfinies qui se décomposent en étapes (ou phase, demi-phases, etc.) Astucieusement, le procédé selon l'invention vérifie, lors d'une étape **S1,** si l'étape à venir d'une séquence de contrôle du moteur est une étape lors de laquelle une mesure de courant doit être réalisée dans l'enroulement A. C'est notamment le cas si la séquence courante est intégrée à une phase de calibration telle que susmentionnée. Ce peut être plus largement le cas pour toute opération en lien avec le moteur M pour laquelle une mesure de courant est utile dans l'enroulement A. En outre le même procédé pourrait concerner l'enroulement B et l'enroulement A n'est cité ici comme objet de mesure de courant qu'à titre d'exemple illustratif. Si l'étape à venir de la séquence de contrôle ne concerne pas une mesure de courant dans l'enroulement A (étape S1, branche « non »), alors le contrôle du moteur est opéré lors de l'étape **S21** par le système 10, selon la séquence prédéfinie courante de contrôle du moteur, par exemple une rotation dans un sens ou dans l'autre du rotor du moteur M. *A contrario,* si l'étape à venir de la séquence courante de contrôle du moteur M est une étape lors de laquelle une mesure de courant doit être réalisée dans l'enroulement A par un circuit spécifique dédié (étape S1, branche « oui »), alors un court-circuit entre les lignes d'alimentation A1 et A2 de l'enroulement A est opéré lors d'une étape **S22** pendant une durée prédéterminée par le système de contrôle 10. Selon un mode de réalisation, le court-circuit entre les lignes d'alimentation A1 et A2 est opéré par fermeture simultanée des éléments de commutation T2 et T3 après ouverture des éléments de commutation T1 et T4. Ainsi l'énergie emmagasinée dans l'enroulement A peut se dissiper par effet Joule en circulant dans l'enroulement A dont les deux bornes sont reliées entre elles. Puis, au terme de cette durée prédéterminée, l'enroulement A est déconnecté des lignes d'alimentation A1 et A2, par ouverture simultanée des éléments de commutation T1, T2, T3 et T4, pour le reste de l'étape courante (ici une étape de mesure) de la séquence prédéterminée pour que la mesure de courant prévue puisse être réalisée par le circuit de mesure dédié relié à l'enroulement A rendu indépendant des lignes d'alimentation A1 et A2. Un tel circuit de mesure n'est pas décrit ici dans la mesure où il ne participe pas à la compréhension de l'invention. Le procédé décrit reboucle ensuite à l'étape S1 pour considérer la prochaine étape de la séquence courante de contrôle du moteur M.

Selon un mode de réalisation, les étapes d'une séquence de contrôle sont synchronisées avec une horloge interne du système de contrôle 10 (par exemple une horloge interne du dispositif de contrôle 100). Selon un mode de réalisation, chaque étape (ou pas) d'une séquence de contrôle du moteur M dure plusieurs millisecondes ou dizaines de millisecondes et la durée de court-circuit entre les lignes d'alimentation A1 et A2 est de l'ordre de 1/10 d'une étape d'une séquence (ou de la durée d'un pas).

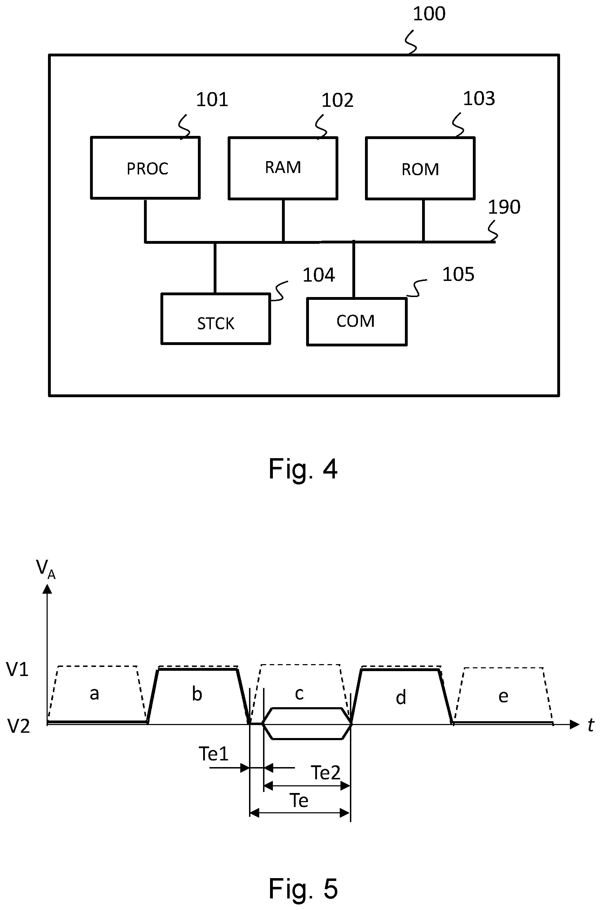

La **Fig. 5** illustre une portion d'une séquence de contrôle de la tension VA appliquée aux bornes de l'enroulement A du moteur M en fonction du temps t. La portion de séquence de contrôle comprend des étapes successives a, b, c, d et e, chacune d'une durée Te. Selon l'exemple décrit ici, il est possible de constater que l'étape c de la séquence de contrôle est une étape de mesure de courant dans l'enroulement A qui comprend un court-circuit entre les lignes d'alimentation A1 et A2 pendant une durée prédéterminée Te1, immédiatement suivi d'une déconnexion de l'enroulement A pendant une durée prédéterminée Te2 (étape de haute impédance du pont H au regard de l'enroulement A). Selon un mode de réalisation la durée Te1 est déterminée lors d'études préparatoires au moment de la conception du système de contrôle, et pour un type de moteur M donné. Selon une variante, la durée Te1 est calculée à partir des caractéristiques électriques de l'enroulement A et des niveaux de tension V1 et V2, notamment.

La **Fig. 4** illustre schématiquement un exemple d'architecture interne d'un dispositif 100 de contrôle notamment configuré pour opérer un contrôle des éléments de commutation T1, T2, T3, T4, T5, T6, T7 et T8 du système 10 à partir d'informations obtenues ou déterminées. Par exemple, des informations obtenues et valant consignes en termes de contrôle du moteur M peuvent être déterminées localement par le dispositif 100 à partir de capteurs, ou à partir d'informations reçues via une interface de communication, depuis un dispositif tiers. De telles informations peuvent être mémorisées dans une mémoire de travail du dispositif 100.

Selon l'exemple d'architecture matérielle représenté à la Fig. 4, le dispositif 100 de contrôle comprend alors, reliés par un bus de communication 190 : un processeur ou CPU (« Central Processing Unit » en anglais) 101 ; une mémoire vive RAM (« Random Access Memory » en anglais) 102 ; une mémoire morte ROM (« Read Only Memory » en anglais) 103 ; une unité de stockage telle qu'un disque dur (ou un lecteur de support de stockage, tel qu'un lecteur de cartes SD (« Secure Digital » en anglais) 104 ; au moins une interface de communication 105 permettant au dispositif 100 de contrôle de communiquer avec des dispositifs distants, tels que par exemple, un dispositif tiers d'un système domotique (une centrale, une passerelle réseau, une télécommande, etc.).

Le processeur 101 est capable d'exécuter des instructions chargées dans la RAM 102 à partir de la ROM 103, d'une mémoire externe (non représentée), d'un support de stockage (tel qu'une carte SD), ou d'un réseau de communication. Lorsque le dispositif 100 de contrôle est mis sous tension, le processeur 101 est capable de lire de la RAM 102 des instructions et de les exécuter. Ces instructions forment un programme d'ordinateur causant la mise en œuvre, par le processeur 101, de tout ou partie d'un procédé décrit en relation avec la Fig. 3.

Tout ou partie du procédé implémenté par le dispositif de 100 de contrôle, ou ses variantes décrites peut être implémenté sous forme logicielle par exécution d'un ensemble d'instructions par une machine programmable constituant un produit programme, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif 100 de contrôle comprend de la circuiterie électronique configurée pour mettre en œuvre le procédé décrit en relation avec lui-même ainsi qu'avec les dispositifs auxquels il est relié tels que par exemple un dispositif contrôle, et que tout autre dispositif impliqué dans l'exécution du procédé de configuration décrit. Bien évidemment, le dispositif 100 de contrôle comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

## Revendications

1. Procédé de contrôle d'un moteur (M) de type moteur pas à pas, ledit moteur comprenant au moins un enroulement (A) bipolaire, ledit procédé étant exécuté par une circuiterie électronique de contrôle dudit moteur (M) et ledit procédé comprenant une exécution d'une séquence itérative de contrôle d'une tension électrique (V_{A}) d'alimentation appliquée aux pôles dudit enroulement respectivement connectés à des lignes d'alimentation (A1, A2) de ladite circuiterie électronique de contrôle, ladite séquence de contrôle comprenant une pluralité d'étapes successives associées chacune à un état de ladite tension (V_{A}), le procédé étant **caractérisé en ce qu'**au moins l'une desdites étapes de ladite séquence, dite étape de mesure, implique une déconnexion dudit enroulement (A) desdites lignes d'alimentation (A1, A2) immédiatement précédée d'un court-circuit entre lesdites lignes d'alimentation (A1, A2) d'une durée prédéterminée inférieure à la durée de ladite étape de mesure.

2. Procédé de contrôle d'un moteur pas à pas selon la revendication 1, selon lequel ladite étape de mesure vise à mesurer une tension aux bornes dudit enroulement ou un courant dans ledit enroulement (A) via une circuiterie électronique indépendante desdites lignes d'alimentation (A1, A2).

3. Système de contrôle (10) d'un moteur (M) de type pas à pas, ledit moteur comprenant au moins un enroulement bipolaire (A), ledit système (10) comprenant une circuiterie électronique de contrôle dudit moteur configurée pour :
- opérer une séquence itérative de contrôle d'une tension électrique (V_{A}) d'alimentation appliquée aux pôles dudit enroulement (A) respectivement connectés à des lignes d'alimentation (A1, A2) de ladite circuiterie électronique de contrôle, et pour que
- ladite séquence de contrôle comprenne une pluralité d'étapes successives associées chacune à une valeur de ladite tension électrique (V_{A}),
ladite circuiterie électronique dudit système (10) étant **caractérisée en ce qu'**elle est configurée pour que l'une desdites étapes de ladite séquence, dite étape de mesure, implique une déconnexion dudit enroulement (A) desdites lignes d'alimentation électrique (A1, A2) immédiatement précédée d'un court-circuit entre lesdites lignes d'alimentation électrique (A1, A2) d'une durée prédéterminée inférieure à la durée de ladite étape de mesure.

4. Système de contrôle (10) d'un moteur pas à pas selon la revendication 3, le système (10) comprenant une circuiterie électronique configurée pour mesurer un courant dans ledit enroulement (A) ou une tension aux bornes dudit enroulement (A) via une circuiterie électronique indépendante desdites lignes d'alimentation.

5. Système de contrôle (10) d'un moteur pas à pas selon l'une des revendications 3 et 4, ledit système (10) comprenant un circuit intégré (100) dédié au contrôle d'un moteur pas à pas.

6. Vanne thermostatique (1000) comprenant un système (10) selon l'une des revendications 3 à 5.

7. Produit Programme d'ordinateur comprenant des instructions de code de programmes pour exécuter les étapes d'un procédé selon l'une des revendications 1 et 2 lorsque lesdites instructions sont exécutées par un processeur d'un système de contrôle (10) d'un moteur pas à pas.

8. Support de stockage comprenant un produit programme d'ordinateur selon la revendication 7.
